# EUROPÄISCHE PATENTSCHRIFT

(11) **EP 1 807 691 B1**
(45) Veröffentlichungstag und Bekanntmachung des Hinweises auf die Patenterteilung: **09.04.2008**
(21) Anmeldenummer: 05798000.5
(22) Anmeldetag: 28.10.2005
(51) Int. Cl.: G01N 27/407, F01N 11/00

(54) **SCHUTZELEMENT FÜR EINEN MESSFÜHLER, SOWIE ENTSPRECHENDER MESSFÜHLER UND WABENKÖRPER**
PROTECTIVE ELEMENT FOR A PROBE, CORRESPONDING PROBE AND HONEYCOMB ELEMENT
ELEMENT DE PROTECTION D'UNE SONDE, SONDE ET CORPS ALVEOLAIRE

(30) Priorität: 05.11.2004 DE 102004053460
(43) Veröffentlichungstag der Anmeldung: 18.07.2007
(73) Patentinhaber: Emitec Gesellschaft für Emissionstechnologie mbH, 53797 Lohmar (DE)
(72) Erfinder: ALTHÖFER, Kait, 51674 Wiehl (DE); BRÜCK, Rolf, 51429 Bergisch Gladbach (DE)
(74) Vertreter: Rössler, Matthias
(86) Internationale Anmeldenummer: PCT/EP2005/011561
(87) Internationale Veröffentlichungsnummer: WO 2006/048192

(56) Entgegenhaltungen:
- EP-A- 0 880 025
- EP-A- 1 422 392
- US-A- 5 073 247
- US-A1- 2002 011 066

## Beschreibung

Gegenstand der Erfindung ist ein Messfühler mit einem Schutzelement, insbesondere zum Einsatz im Abgassystem einer Verbrennungskraftmaschine, zur Verhinderung von Wasserschlag an Messfühlern und ein Wabenkörper, insbesondere ein Katalysatorträgerkörper und/oder Filterkörper mit einem solchen Messfühler und ein entsprechendes Kraftfahrzeug. Der bevorzugte Einsatzbereich liegt im Abgassystem eines Kraftfahrzeugs, beispielsweise eines Automobils oder eines motorbetriebenen Zweirades.

Aus der EP-A-0880025 ist ein Gassensor für Abgasstränge bekannt, dessen Messspitze durch eine Schutzkappe mit kleinen Öffnungen vor Wasserteilchen geschützt ist. Weiter ist aus der US-A-5073247 ein Gassensor für Abgassysteme bekannt, der eine Metallhülse zum Schutz der Messspitze aufweist, die eine Öffnung parallel zum vorbeiströmenden Abgas aufweist, so dass Wasserteilchen nicht mit der Messspitze in Berührung kommen.

Messfühler, insbesondere Lambda-Sonden, die in Abgassystemen von Verbrennungskraftmaschine zum Einsatz kommen wie beispielsweise in Wabenkörpern, werden oftmals durch Wasserschlag funktionsunfähig gemacht. Unter Wasserschlag versteht man den Vorgang des Benetzens der Messfühleroberfläche mit flüssigem Wasser oder auch das Auskondensieren von Wasserdampf auf der Oberfläche des Messfühlers.

Da ein Wasserschlag im Regelfall zur unwiederbringlichen Zerstörung oder zumindest zu einer Fehlfunktion des Messfühlers führt, liegt der vorliegenden Erfindung die Aufgabe zugrunde, Maßnahmen anzugeben, die zu einer sicheren Verhinderung des Wasserschlages an einem Messfühler führen, sowie einen entsprechenden Messfühler und Wabenkörper, sowie ein entsprechendes Kraftfahrzeug anzugeben.

Diese Aufgabe wird gelöst durch einen Messfühler mit einem Schutzelement mit den Merkmalen des Anspruchs 1, einen Wabenkörper mit den Merkmalen des Anspruchs 20 und ein Kraftfahrzeug mit den Merkmalen des Anspruchs 22. Vorteilhafte Weiterbildungen sind Gegenstand der jeweiligen abhängigen Ansprüche.

Bei einem erfindungsgemäßen Messfühler zum Einsatz im Abgassystem einer Verbrennungskraftmaschine, insbesondere Lambda-Sonde, Temperatur- und/oder Gaskonzentrationssensor, umfassend zumindest ein Schutzelement, umfasst das Schutzelement wenigstens eine temporär wasserbindende Schicht, welche in einem ersten Betriebszustand Wasser chemisch und/oder physikalisch bindet und in einem zweiten Betriebszustand das gebundene Wasser abgibt. Das Schutzelement ist dabei an den Messfühler angeformt und/oder mit diesem stoffschlüssig verbunden. Das Schutzelement ist dabei für einen Messfühler zum Einsatz im Abgassystem eines Kraftfahrzeugs geeignet ausgebildet. Bevorzugt ist das Schutzelement so ausgestaltet, dass eine Innenfläche zumindest teilweise an einer Außenfläche des Messfühlers anlegbar ist.

Beim Einbau eines Messfühlers in einen Wabenkörper wie beispielsweise einen Katalysatorträgerkörper und/oder einen Filterkörper liegt aufgrund der ablaufenden exothermen katalytischen Reaktion gerade auch in einer Kaltstartphase einer Verbrennungskraftmaschine ein Temperaturminimum am Sockel des Messfühlers vor, welcher an der Außenfläche des Wabenkörpers, insbesondere an einem dort ausgebildeten Mantelrohr liegt. Dies beruht auf der dort vorliegenden größten Wärmekapazität, die eine relativ langsame Aufheizung bewirkt. Ist nun in Teilen des Wabenkörpers die katalytische Reaktion angelaufen, so kann es aufgrund des exothermen Charakters der Reaktion dazu kommen, dass sich im Inneren des Wabenkörpers Wasserdampf bildet. Trifft dieser nun auf den Messfühler, insbesondere eine Lambda-Sonde, so erfolgt hier ein Auskondensieren, also ein Wasserschlag, an der kältesten Stelle insbesondere an der Außenfläche des Wabenkörpers und/oder am Mantelrohr anliegenden Sockel des Messfühlers, der sich durch die relativ hohe Wärmekapazität des Mantelrohres an dieser Stelle langsam aufheizt. Wird nun hier ein erfindungsgemäßes Schutzelement ausgebildet, insbesondere als zusätzliches Bauteil, welches einfach über den Messfühler gestreift wird oder auch integral an diesen angeformt ist, so führt die wasserbindende Schicht dazu, dass im ersten Betriebszustand Wasser temporär an und/oder in dieser chemisch und/oder physikalisch beispielsweise durch eine Chemi- oder Physisorption gebunden wird. Insbesondere bei beheizten Lambda-Sonden kann das Schutzelement auch so ausgebildet sein, dass zwischen einer Innenfläche des Schutzelements und einer Außenfläche des Messfühlers zumindest in Teilbereichen ein Spalt ausgebildet ist. Umfasst der Messfühler einen Messwertnehmer, beispielsweise ein entsprechendes Halbleiterbauteil, welches von einer Schutzkappe, die insbesondere einen Schutz vor mechanischen und/oder thermischen Einflüssen auf den Messwertnehmer bewirkt, umgeben ist, so kann das Schutzelement auch bevorzugt so ausgebildet sein, dass es zwischen Messwertnehmer und Schutzkappe ausgebildet ist.

Die vorliegende chemische und/oder physikalische Bindung ist durch Übergang in den zweiten Betriebszustand reversibel. Der Übergang in den zweiten Betriebszustand kann beispielsweise durch eine Erhöhung der Temperatur erfolgen, so dass beispielsweise Wasser bei Temperaturen unter einer Grenztemperatur an und/oder in der wasserbindenden Schicht adsorbiert und nach Überschreiten der Grenztemperatur wieder desorbiert. Bevorzugt ist auch die Ausbildung des Schutzelementes insgesamt aus einem temporär wasserbindenden Material, so dass die temporär wasserbindende Schicht das gesamte Schutzelement bildet.

So wirkt die wasserbindende Schicht als eine Art Schwamm, in dem das den Wasserschlag verursachende Wasser zumindest teilweise temporär gebunden wird. Werden eine Vielzahl von Kaltstarts hintereinander durchgeführt ohne das die Grenztemperatur überschritten wird, so würde dies dazu führen, dass die Wasseraufnahmekapazität der wasserbindenden Schicht zu einem bestimmten Zeitpunkt erschöpft ist. Besonders vorteilhaft ist deshalb ein Motormanagement der Verbrennungskraftmaschine, insbesondere im Rahmen der Motorsteuerung der Verbrennungskraftmaschine eines Automobils, bei dem das Durchführen einer Vielzahl von Kaltstarts, die keinen Übergang in den zweiten Betriebszustand bewirken, erkannt wird und rechtzeitig vor Erschöpfen der Wasseraufnahmekapazität der wasserbindenden Schicht die Kraftstoffzusammensetzung und/oder - menge geändert wird, so dass beispielsweise unverbrannte Kohlenwasserstoffe den Wabenkörper erreichen und dort verbrannt werden, so dass sicher der zweite Betriebszustand erreicht wird.

Die Eignung des Schutzelements für einen Messfühler zum Einsatz im Abgassystem eines Kraftfahrzeugs bedingt insbesondere, dass das Schutzelement den Bedingungen im Abgassystem standhalten kann, insbesondere den dort anliegenden Temperaturen und auftretenden Temperaturtransienten und/oder -gradienten, den entsprechenden Gasdrücken und/oder stark reaktiven Substanzen, sowie mechanischen Belastung wie Vibrationen oder Stößen. Je nach Ausbildung des Schutzelementes kann dieses dazu geeignet sein, den Messfühler und/oder den Messwertnehmer voll- oder auch nur teilumfänglich insbesondere in Teilbereichen zu umschließen. Im letzteren Fall kann das Schutzelement beispielsweise als Kreisringsegment ausgebildet sein. Auch die Ausbildung mehrerer korrespondierender teilumfänglicher Schutzelemente, die gemeinsam den Messfühler vollumfänglich insbesondere in einem axialen Teilbereich umschließen, ist möglich und erfindungsgemäß.

Gemäß einer vorteilhaften Weiterbildung der Erfindung weist das Schutzelement eine im wesentlichen geschlossene Form mit einer Innen- und einer Außenfläche auf, insbesondere liegt das Schutzelement ring- und/oder kreisringförmig vor.

Das Schutzelement kann insbesondere ringförmig als Schutzring ausgebildet sein. Ein Ring bezeichnet in diesem Zusammenhang insbesondere eine geschlossene Struktur, die in ihrer geometrischen Form an die geometrische Form eines Messfühlers, einer Schutzkappe und/oder eines Messwertnehmers angepasst und/oder anpassbar ist. Ein Ring kann folglich nicht nur eine kreisringförmige Geometrie aufweisen, sondern beispielsweise auch die Grundform eines Mehrecks, bevorzugt eines Sechsecks oder Vierecks, insbesondere eines Quadrates oder eines Rechtecks oder auch einer Ellipse aufweisen. Jede geschlossene, ringförmige Struktur, die eine Außen- und eine Innenfläche aufweist, ist als Ring im Sinne der vorliegenden Erfindung zu betrachten.

Gemäß einer vorteilhaften Ausgestaltung des erfindungsgemäßen Sicherungsrings ist das Schutzelement zumindest teilweise kompressibel oder elastisch.

Dies erleichtert in vorteilhafter Weise bei Ausbildung des Schutzelementes als vom Messfühler getrenntes Bauteil das Anbringen des Schutzelements am Messfühler beispielsweise durch einfaches Überstreifen über den Messfühler.

Gemäß einer weiteren vorteilhaften Ausgestaltung des erfindungsgemäßen Sicherungsrings ist zumindest die temporär wasserbindende Schicht porös, weist insbesondere eine Porosität von wenigstens 40 %, bevorzugt mehr als 70% auf.

Durch die Ausbildung zumindest der temporär wasserbindenden Schicht als poröse Struktur wird die für chemische und/oder physikalische Bindung des Wassers zur Verfügung stehende Oberfläche in vorteilhafter Weise erhöht.

Gemäß einer weiteren vorteilhaften Ausgestaltung des erfindungsgemäßen Schutzelements umfasst dieser, insbesondere die wasserbindende Schicht, mindestens einen der folgenden Stoffe:
a) Glimmer;
b) Aluminiumoxid, insbesondere □-Aluminiumoxid oder
c) Zeolith, insbesondere Zeolith A, X und/oder Y und/oder Faujasite.

Unter Glimmer werden insbesondere monoklin kristallisierende Silikalit-Minerale verstanden wie beispielsweise Muskovit, Lepidolith, Biotit oder Paragonit. Insbesondere sind unter Glimmer Stoffe zu verstehen, die sich anhand der folgenden Formel darstellen lassen:

(K, Na, Ca)(Al, Mg, Fe, Li)₂₋₃(OH)₂(Si,Al)₄₋₅O₁₀,

wobei die in Klammern stehenden Atome in beliebiger Mischung vertreten sein können. Unter dem Begriff Zeolith werden sowohl natürlich vorkommende als auch synthethisch hergestellte Aluminosilicate verstanden, insbesondere auch solche, die einem zumindest teilweisen Kationenaustausch unterzogen wurden. Grundsätzlich sind aber auch andere Stoffe zum Aufbau der wasserbindenden Schicht möglich und erfindungsgemäß, wenn durch diese Wasser in einem ersten Betriebszustand gebunden werden kann und in einem zweiten Betriebszustand wieder abgegeben wird. Auch die Ausbildung der wasserbindenden Schicht aus mehreren Werkstoffen oder mehrerer wasserbindender Schichten ist möglich und erfindungsgemäß.

Gemäß einer weiteren vorteilhaften Ausführung des erfindungsgemäßen Schutzelementes ist dieses temperaturbeständig bei Temperaturen von bis zu 500°C, bevorzugt 750°C, besonders bevorzugt 1000°C.

Eine solche Temperaturbeständigkeit erlaubt in vorteilhafter Weise den Einsatz im Abgassystem eines Automobils.

Gemäß einer weiteren vorteilhaften Ausführung des erfindungsgemäßen Schutzelementes unterscheiden sich der erste Betriebszustand und der zweite Betriebszustand durch eine Betriebstemperatur.

Folglich kann der Übergang von einem Betriebszustand zum anderen durch Änderung der Betriebstemperatur, also der am Schutzelement anliegenden Temperatur erfolgen.

Gemäß einer weiteren vorteilhaften Ausführung des erfindungsgemäßen Schutzelements liegt der erste Betriebszustand im wesentlichen bei Temperaturen unterhalb einer Grenztemperatur, insbesondere einer Desorptionstemperatur, und der zweite Betriebszustand im wesentlichen bei Temperaturen oberhalb der Grenztemperatur vor.

Dies zeichnet insbesondere die temporäre Bindung des Wassers durch Adsorption aus. Unter Grenztemperatur ist hier auch ein Grenztemperaturbereich zu verstehen, in dem eine Änderung des Verhältnisses von Adsorption zu Desorption an bzw. in der wasserbindenden Schicht erfolgt.

Gemäß einer weiteren vorteilhaften Ausführung des erfindungsgemäßen Schutzelements ist die Grenztemperatur größer als die Siedetemperatur von Wasser.

Dies verhindert wirkungsvoll, dass Wasser von der wasserbindenden Schicht abgegeben wird und direkt wieder auskondensiert. Insbesondere liegt die Grenztemperatur höher als 100°C.

Gemäß einer weiteren vorteilhaften Ausführung des erfindungsgemäßen Schutzelementes liegt die wasserbindende Schicht zumindest teilweise auf einer Oberfläche des Schutzelements.

Gemäß einer weiteren vorteilhaften Ausführung des erfindungsgemäßen Schutzelements ist die wasserbindende Schicht zumindest teilweise auf einer Oberfläche des Schutzelements ausgebildet, die zumindest teilweise relativ zum Messfühler und/oder zu einem Messwertnehmer außen ist.

Somit ist die wasserbindende Schicht zumindest nicht ausschließlich an der Innenfläche des Schutzelements ausgebildet und auch nicht ausschließlich an der Außenfläche des Schutzelementes, die beim späteren Einbau des Messfühlers insbesondere an der Innenfläche der Messfühlerbohrung anliegt. Das bedeutet, dass die wasserbindende Schicht bevorzugt in solchen Bereichen der Oberfläche des Schutzelementes ausgebildet ist, die beim Einsatz beispielsweise im Wabenkörper mit dem Abgas in Kontakt sind.

Gemäß einer weiteren vorteilhaften Ausführung des erfindungsgemäßen Schutzelements ist das Schutzelement zur im wesentlichen gasdichten Anlage an der Außenfläche des Messfühlers und/oder des Messwertnehmers geeignet.

Gemäß einer weiteren vorteilhaften Ausführung des erfindungsgemäßen Schutzelements ist das Schutzelement zur im wesentlichen gasdichten Anlage an einer Innenfläche einer Messfühlerbohrung geeignet.

Durch die Eignung zur im wesentlichen gasdichten Anlage an der Außenfläche des Messfühlers und/oder der Innenfläche der Messfühlerbohrung kann das Schutzelement auch eine Dichtfunktion erfüllen, beispielsweise als Dichtungsring ausgebildet sein.

Gemäß einer weiteren vorteilhaften Ausführung des erfindungsgemäßen Schutzelements umfasst das Schutzelement Heizmittel.

Durch diese Heizmittel ist das Schutzelement beheizbar. Durch eine Aufheizung des Schutzelements wird die Möglichkeit eines Wasserschlages zusätzlich wirkungsvoll verringert. Die Heizmittel können beispielsweise einen einfachen Heizdraht umfassen, welcher im Inneren des Schutzelements ausgebildet ist.

Gemäß einer vorteilhaften Ausführung des erfindungsgemäßen Messfühlers umfasst der Messfühler einen Messwertnehmer, wobei das Schutzelement mindestens eine Innenfläche umfasst, welche zumindest teilweise an einer Außenfläche des Messfühlers und/oder des Messwertnehmers anliegt und/oder zumindest teilweise einer Außenfläche des Messfühlers und/oder des Messwertnehmers gegenüberliegend ausgebildet ist. Besonders bevorzugt ist dabei, dass zwischen der Außenfläche des Messfühlers und/oder des Messwertnehmers und der Innenfläche des Schutzelements zumindest in Teilbereichen ein Spalt ausgebildet ist.

Bevorzugt kann das Schutzelement an den Messfühler und/oder den Messwertnehmer angeformt und/oder mit diesen stoffschlüssig verbunden, insbesondere verschweißt sein. Auch eine form- und/oder kraftschlüssige Verbindung ist möglich und erfindungsgemäß.

Gemäß einer weiteren vorteilhaften Ausführung des erfindungsgemäßen Messfühlers umfasst dieser eine Schutzkappe, wobei das Schutzelement zwischen Schutzkappe und Messwertnehmer ausgebildet ist.

Eine Schutzkappe wird regelmäßig insbesondere bei Lambdasonden ausgebildet. Hierbei umgibt die Schutzkappe den Messwertnehmer, wobei geeignete Öffnungen den Zutritt des zu analysierenden Gases zu dem innerhalb der Schutzkappe liegenden Messwertnehmer der Lambdasonde erlauben. Diese Schutzkappe dient in erster Linie der Vermeidung von Transport- und Einbauschäden. Zwar soll auch eine solche Schutzkappe den Wasserschlag, also beispielsweise eine Thermoschockbelastung des regelmäßig beheizten Messwertnehmers durch Kontakt mit Wassertropfen, verhindern, jedoch treten trotz solcher Schutzkappen relativ oft Schädigungen durch Wasserschlag auf, insbesondere dann, wenn ein Kraftfahrzeug überwiegend im Kurzstreckenbetrieb, also regelmäßig in Kaltstartphasen, gefahren wird. Hier kann die Ausbildung des erfindungsgemäßen Schutzelements zusätzlich zwischen Schutzkappe und eigentlichem Messwertnehmer das Wasserschlagrisiko insbesondere bei Lambdasonden weiter deutlich reduzieren.

Gemäß einem weiteren Aspekt des erfinderischen Gedankens wird ein Wabenkörper, insbesondere ein Katalysatornägerkörper und/oder Filterkörper vorgeschlagen, der für ein Fluid durchströmbare Hohlräume aufweist, umfassend mindestens einen erfindungsgemäßen Messfühler.

Der erfindungsgemäße Wabenkörper kann aus metallischen und/oder keramischen Werkstoffen ausgebaut sein, insbesondere aus zumindest teilweise strukturierten metallischen und/oder keramischen Lagen und gegebenenfalls im wesentlichen glatten metallischen und/oder keramischen Lagen gewickelt oder geschichtet und verwunden oder auch extrudiert werden.

Gemäß einer weiteren vorteilhaften Ausführung des erfindungsgemäßen Wabenkörpers umfasst die wasserbindende Schicht zumindest teilweise eine Oberfläche des Schutzelements, die in strömungsmechanischen Kontakt mit den Hohlräumen bringbar ist.

In strömungsmechanischen Kontakt bringen bedeutet in diesem Zusammenhang insbesondere, dass Messfühler und/oder Schutzelement beim Durchströmen des Wabenkörpers mit einem Fluid, insbesondere mit Abgas, in Kontakt kommen bzw. von diesem umströmt werden. Hier verhindert das Schutzelement wirkungsvoll Wasserschlag, insbesondere dann, wenn es an der Stelle des Messfühlers mit der größten Wärmekapazität wie beispielsweise an einem Sockel am Übergang zwischen Messfühler und Mantelrohr des Wabenkörpers ausgebildet ist.

Gemäß einem weiteren Aspekt des erfinderischen Gedankens wird ein Kraftfahrzeug, insbesondere ein Automobil, ein motorisiertes Zweirad, ein Flugzeug oder ein Boot, vorgeschlagen, welches mindestens einen erfindungsgemäßen Wabenkörper und/oder einen erfindungsgemäßen Messfühler umfasst.

Die für das Schutzelement offenbarten Details und Vorteile sind in gleicher Weise auf den erfindungsgemäßen Messfühler, den erfindungsgemäßen Wabenkörper und/oder das erfindungsgemäße Kraftfahrzeug übertragbar und anwendbar. Weitere Vorteile und Ausfiihrungsbeispiele der Erfindung werden anhand der Zeichnung erläutert, ohne dass die Erfindung auf diese beschränkt wäre. Es zeigen:
- Fig. 1: schematisch einen erfindungsgemäßen Wabenkörper im Querschnitt mit einem ersten Ausführungsbeispiel des Schutzelements;
- Fig. 2: schematisch ein zweites Ausführungsbeispiel des Schutzelements im Querschnitt;
- Fig. 3: schematisch einen erfindungsgemäßen Messfühler in perspektivischer Ansicht; und
- Fig. 4: schematisch einen erfindungsgemäßen Messfühler im Querschnitt.

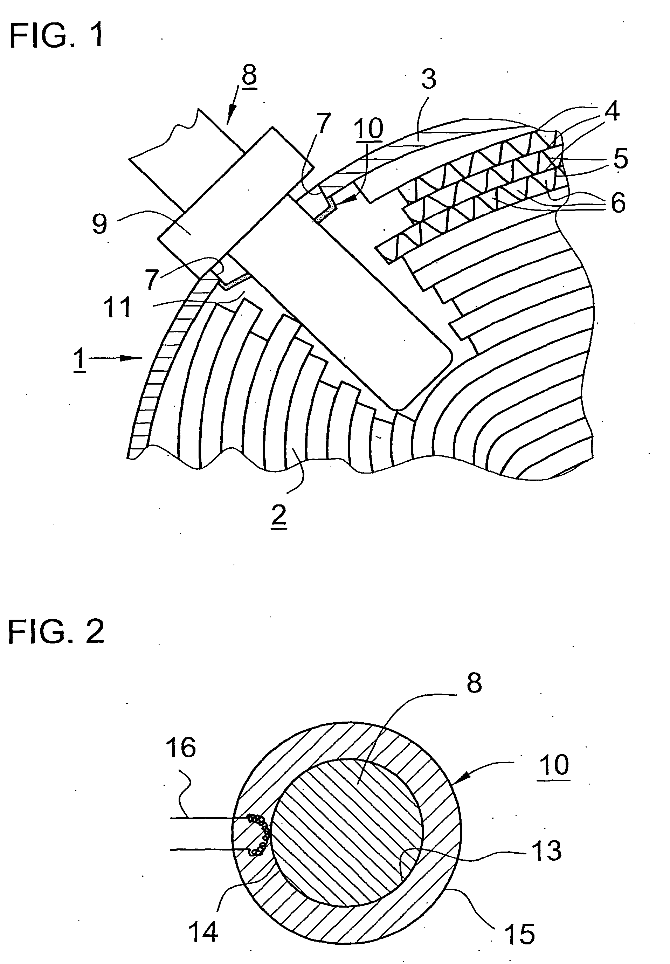

Fig. 1 zeigt einen Wabenkörper 1 umfassend eine Wabenstruktur 2 und ein Mantelrohr 3. Die Wabenstruktur 2 ist im vorliegenden Beispiel durch Stapeln und Verwinden von im wesentlichen glatten Lagen 4 und zumindest teilweise strukturierten Lagen 5 aufgebaut, die der Übersichtlichkeit halber nur zum Teil eingezeichnet sind. Die Lagen 4, 5 können aus metallischem und/oder keramischem Material insbesondere auch Filtermaterial aufgebaut sein. Die Lagen 4, 5 bilden für ein Fluid durchströmbare Hohlräume 6, im vorliegenden Beispiel sich von einem Ende des Wabenkörpers 1 zum anderen Ende erstreckende Kanäle.

Das Mantelrohr 3 umfasst eine Messfühlerbohrung 7, in die ein Messfühler 8 eingebracht ist. Zur Fixierung des Messfühlers 8 in der Messfühlerbohrung 7 ist ein Verbindungsmittel 9, beispielsweise ein Gewinde, ausgebildet, welches mit entsprechenden - nicht eingezeichneten - Verbindungsmitteln des Messfühlers 8 korrespondiert.

Zwischen der Messfühlerbohrung 7 und dem Messfühler 8 ist ein Schutzelement 10 ausgebildet. Dieses weist eine wasserbindende Schicht 11 auf, die so auf der Oberfläche des Schutzelements 10 ausgebildet ist, dass beim Durchströmen des Wabenkörpers 1 mit Abgas das Schutzelement 10 in Kontakt mit dem Abgas kommt. Hierbei ist die wasserbindende Schicht 11 relativ zum Messfühler 8 außen ausgebildet, d. h. insbesondere nicht an der Innenfläche 13 des Schutzelements 10, die in direktem Kontakt mit der Außenfläche 14 des Messfühlers 8 steht. Unter der wasserbindenden Schicht 11 ist eine Trägerschicht 12 ausgebildet, die beispielsweise elastisch oder kompressibel sein kann. Allerdings ist auch die Ausbildung des gesamten Schutzelementes 10 als wasserbindende Schicht 11 möglich und erfindungsgemäß. Durch die Ausbildung der wasserbindenden Schicht 11, die wie oben dargelegt die temporäre chemische und/oder physikalische Bindung von Wasser ermöglicht, kann Wasserschlag aufgrund des Auskondensierens von im Abgas enthaltenem Wasserdampf, insbesondere in der Kaltstartphase des Motors, bevor also der Wabenkörper 1 eine Temperatur erreicht hat, die über dem Siedepunkt von Wasser liegt, wirkungsvoll verhindert werden. Hier wirkt die wasserbindende Schicht 11 als eine Art Schwamm, der temporär Wasser speichert und wieder abgibt. Die Abgabe des Wassers kann zum Beispiel bei einer wasserbindenden Schicht 11, die Wasser durch Adsorption bindet, nach Überschreiten einer Desorptionstemperatur durch Desorption erfolgen, wenn sich der Wabenkörper 1 aufgrund der Aufheizung durch Abgas und der ablaufenden exothermen Reaktion und damit auch Schutzelement 10 und wasserbindende Schicht 11 erwärmt.

Fig. 2 zeigt einen Messfühler 8 mit einem zweiten Ausführungsbeispiel eines Schutzelements 10 im Querschnitt. Das Schutzelement 10 ist hier als Schutzring ausgeführt, welcher den Messfühler 8 vollumfänglich umgibt. Eine Innenfläche 13 des Schutzelements 10 liegt im wesentlichen gasdicht an einer Außenfläche 14 des Messfühlers 8 an. Bei einer im wesentlichen gasdichten Anlage der Außenfläche 15 des Schutzelements 10 an einer - nicht gezeigten - Innenfläche einer Messfühlerbohrung 7 erfüllt das Schutzelement 10 gleichzeitig eine Dichtfunktion um wirkungsvoll zu verhindern, dass Abgas aus dem Wabenkörper 1 austritt.

Weiterhin sind Heizmittel 16 ausgebildet, die im vorliegenden Ausführungsbeispiel aus einer Heizwendel bestehen. Andere Heizmittel 16 sind möglich und erfindungsgemäß.

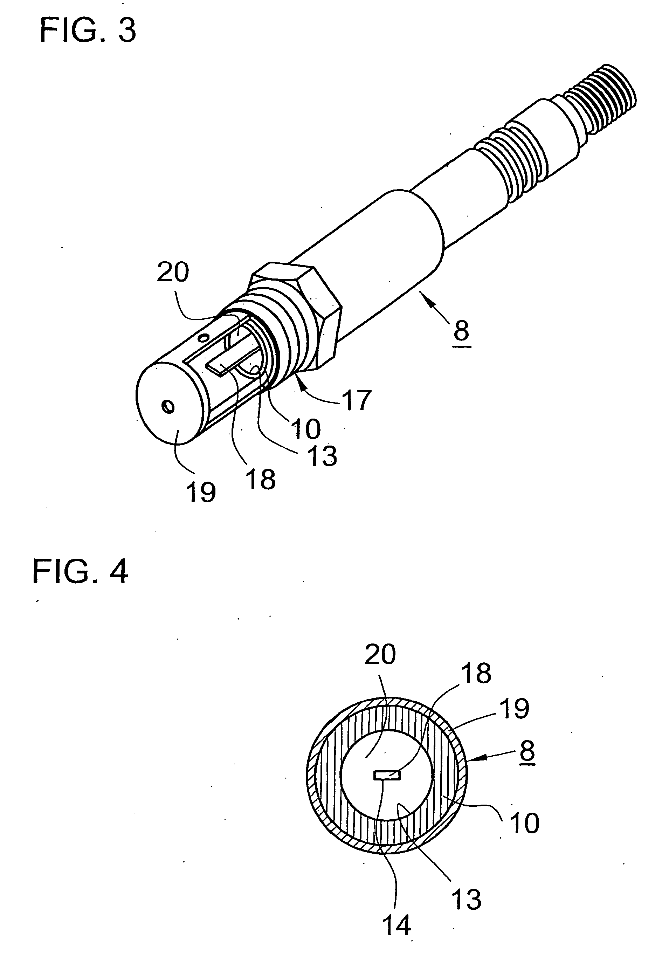

Fig. 3 zeigt schematisch einen erfindungsgemäßen Messfühler 8, welcher ein zu einem Verbindungsmittel 9 einer Messfühlerbohrung 8 korrespondierendes Gewinde 17 aufweist. Die eigentliche Messwertaufnahme erfolgt über einen Messwertnehmer 18, welcher beispielsweise in rechteckiger Geometrie als Halbleiterbauteil ausgebildet ist. Der Messwertnehmer 18 ist von einer Schutzkappe 19 umgeben, die den Messwertnehmer 18 z. B. gegenüber mechanischen Einwirkungen schützt. Ein erfindungsgemäßes Schutzelement 10 ist im Inneren der Schutzkappe 19 ausgebildet, so dass zwischen einer Innenfläche 13 des Schutzelements 10 und einer Außenfläche des Messwertnehmers 18 ein Spalt 20 gebildet ist. Dies ist insbesondere dann von Vorteil, wenn der Messfühler 8 insbesondere im Bereich des Messwertnehmers 18 beheizt ausgeführt ist. In einem solchen dient das Schutzelement 10 als zusätzliche Sicherung gegenüber einem möglichen Wasserschlag.

Fig. 4 zeigt schematisch im Querschnitt einen erfindungsgemäßen Messfühler 8 umfassend einen Messwertnehmer 18, eine Schutzkappe 19 und ein erfindungsgemäßes Schutzelement 10. Das Schutzelement 10 ist so ausgeführt, dass eine Innenfläche 13 des Schutzelements 10 durch einen Spalt 20 von einer Außenfläche eines Messwertnehmers 18 getrennt ist, wobei Form und Größe des Spaltes 20 je nach Ausführungsbeispiel variieren kann.

Das Schutzelement 10 verhindert durch die Ausbildung der wasserbindenden Schicht 11 wirkungsvoll Wasserschlag am Messfühler 8, da das Auskondensieren von Wasserdampf insbesondere in der Kaltstartphase an der Stelle des Messfühlers 8 mit der größten Wärmekapazität verhindert wird. Die wasserbindende Schicht 11 bindet in einem Betriebszustand temporär das Wasser, um es in einem anderen Betriebszustand wieder abzugeben.

### Bezugszeichenliste

- 1: Wabenkörper
- 2: Wabenstruktur
- 3: Mantelrohr
- 4: im wesentlichen glatte Lage
- 5: zumindest teilweise strukturierte Lage
- 6: Hohlraum
- 7: Messfühlerbohrung
- 8: Messfühler
- 9: Verbindungsmittel
- 10: Schutzelement
- 11: wasserbindende Schicht
- 12: Trägerschicht
- 13: Innenfläche des Schutzelements
- 14: Außenfläche des Messfühlers
- 15: Außenfläche des Schutzelements
- 16: Heizmittel
- 17: Gewinde
- 18: Messwertaufnehmer
- 19: Schutzkappe
- 20: Spalt

## Patentansprüche

1. Messfühler (8) zum Einsatz im Abgassystem einer Verbrennungskraftmaschine, insbesondere Lambda-Sonde, Temperatur- und/oder Gaskonzentrationssensor, umfassend zumindest ein Schutzelement (10), das an den Messfühler (8) angeformt ist und/oder mit diesem stoffschlüssig verbunden ist, , **dadurch gekennzeichnet, dass** das Schutzelement (10) wenigstens eine temporär wasserbindende Schicht (11) umfasst, welche in einem ersten Betriebszustand Wasser chemisch und/oder physikalisch bindet und in einem zweiten Betriebszustand das gebundene Wasser abgibt.

2. Messfühler (8) nach Anspruch 1, **dadurch gekennzeichnet, dass** das Schutzelement (10) eine im wesentlichen geschlossene Form mit einer Innen- (13) und einer Außenfläche (15) aufweist, insbesondere ring- und/oder kreisringförmig vorliegt.

3. Messfühler (8) nach Anspruch 1 oder 2, **dadurch gekennzeichnet, dass** das Schutzelement (10) zumindest teilweise kompressibel oder elastisch ist.

4. Messfühler (8) nach einem der vorhergehenden Ansprüche, **dadurch gekennzeichnet, dass** zumindest die temporär wasserbindende Schicht (11) porös ist, insbesondere eine Porosität von wenigstens 40 %, bevorzugt mehr als 70% aufweist.

5. Messfühler (8) nach einem der vorhergehenden Ansprüche, **dadurch gekennzeichnet, dass** das Schutzelement (10), insbesondere die wasserbindende Schicht (11), mindestens einen der folgenden Stoffe umfasst:
a) Glimmer;
b) Aluminiumoxid; oder
c) Zeolith, insbesondere Zeolith A, X und/oder Y und/oder Faujasite.

6. Messfühler (8) nach einem der vorhergehenden Ansprüche, **dadurch gekennzeichnet, dass** das Schutzelement (10) temperaturbeständig bei Temperaturen von bis zu 500°C, bevorzugt 750°C, besonders bevorzugt 1000°C ist.

7. Messfühler (8) nach einem der vorhergehenden Ansprüche, **dadurch gekennzeichnet, dass** sich der erste Betriebszustand und der zweite Betriebszustand durch eine Betriebstemperatur unterscheiden.

8. Messfühler (8) nach Anspruch 7, **dadurch gekennzeichnet, dass** der erste Betriebszustand im wesentlichen bei Temperaturen unterhalb einer Grenztemperatur, insbesondere einer Desorptionstemperatur, und der zweite Betriebszustand im wesentlichen bei Temperaturen oberhalb der Grenztemperatur vorliegt.

9. Messfühler (8) nach Anspruch 8, **dadurch gekennzeichnet, dass** die Grenztemperatur größer ist als die Siedetemperatur von Wasser.

10. Messfühler (8) nach einem der vorhergehenden Ansprüche, **dadurch gekennzeichnet, dass** die wasserbindende Schicht (11) zumindest teilweise auf einer Oberfläche des Schutzelements (10) liegt.

11. Messfühler (8) nach Anspruch 10, **dadurch gekennzeichnet, dass** die wasserbindende Schicht (11) zumindest teilweise auf einer Oberfläche des Schutzelements (10) ausgebildet ist, die zumindest teilweise relativ zum Messfühler (8) und/oder zu einem Messwertnehmer (18) außen ist.

12. Messfühler (8) nach einem der vorhergehenden Ansprüche, **dadurch gekennzeichnet, dass** das Schutzelement (10) zur im wesentlichen gasdichten Anlage an der Außenfläche (14) des Messfühlers (8) und/oder des Messwertnehmers (18) geeignet ist.

13. Messfühler (8) nach einem der vorhergehenden Ansprüche, **dadurch gekennzeichnet, dass** das Schutzelement (10) zur im wesentlichen gasdichten Anlage an einer Innenfläche einer Messfühlerbohrung (7) geeignet ist.

14. Messfühler (8) nach einem der vorhergehenden Ansprüche, **dadurch gekennzeichnet, dass** das Schutzelement (10) Heizmittel (16) umfasst.

15. Messfühler (8) nach einem der vorhergehenden Ansprüche, umfassend einen Messwertnehmer (18), **dadurch gekennzeichnet, dass** das Schutzelement (10) mindestens eine Innenfläche (13) umfasst, welche zumindest teilweise an einer Außenfläche (14) des Messfühlers (8) und/oder des Messwertnehmers (18) anliegt und/oder zumindest teilweise einer Außenfläche (14) des Messfühlers (8) und/oder des Messwertnehmers (18) gegenüberliegend ausgebildet ist.

16. Messfühler (8) nach einem der Ansprüche 1 bis 14, **dadurch gekennzeichnet, dass** zwischen der Außenfläche (14) des Messfühlers (8) und/oder des Messwertnehmers (18) und der Innenfläche (13) des Schutzelements (10) zumindest in Teilbereichen ein Spalt (20) ausgebildet ist.

17. Messfühler (8) nach einem der vorhergehenden Ansprüche, **dadurch gekennzeichnet, dass** das Schutzelement (10) an den Messwertnehmer (18) angeformt und/oder mit diesem stoffschlüssig verbunden ist.

18. Messfühler (8) nach einem der vorhergehenden Ansprüche, **dadurch gekennzeichnet, dass** das Schutzelement (10) kraft- und/oder formschlüssig mit dem Messfühler (8) und/oder mit dem Messwertnehmer (18) verbunden ist.

19. Messfühler (8) nach einem der vorhergehenden Ansprüche, welcher eine Schutzkappe (19) umfasst, **dadurch gekennzeichnet, dass** das Schutzelement (10) zwischen Schutzkappe (19) und Messwertnehmer (18) ausgebildet ist.

20. Wabenkörper (1), insbesondere Katalysatornägerkörper und/oder Filterkörper, der für ein Fluid durchströmbare Hohlräume (6) aufweist, umfassend mindestens einen Messfühler (8) nach einem der Ansprüche 1 bis 19.

21. Wabenkörper (1) nach Anspruch 20, **dadurch gekennzeichnet, dass** die wasserbindende Schicht (11) zumindest teilweise eine Oberfläche des Schutzelements (10) umfasst, die in strömungsmechanischen Kontakt mit den Hohlräumen (8) bringbar ist.

22. Kraftfahrzeug, insbesondere ein Automobil, ein Motorrad, ein Flugzeug oder ein Boot, umfassend mindestens einen Wabenkörper (1) nach Anspruch 20 oder 21 und/oder einen Messfühler (8) nach einem der Ansprüche 1 bis 19.

## Claims

1. A measuring probe (8) for use in the exhaust system of an internal combustion engine, in particular lambda probe, temperature sensor and/or gas concentration sensor, comprising at least a protective element (10) that is integrally formed on the measuring probe (8) and/or is connected thereto in a materially joined fashion, **characterized in that** the protective element (10) comprises at least one temporarily water-binding layer (11) which in a first operating state binds water chemically and/or physically and in a second operating state releases the bound water.

2. The measuring probe (8) as claimed in claim 1, **characterized in that** the protective element (10) has an essentially closed shape with an inner surface (13) and an outer surface (15), and is in particular in the form of a ring and/or circular ring.

3. The measuring probe (8) as claimed in claim 1 or 2, **characterized in that** the protective element (10) is at least partially compressible or elastic.

4. The measuring probe (8) as claimed in one of the preceding claims, **characterized in that** at least the temporarily water-binding layer (11) is porous, and has in particular a porosity of at least 40%, preferably more than 70%.

5. The measuring probe (8) as claimed in one of the preceding claims, **characterized in that** the protective element (10), in particular the water-binding layer (11), comprises at least one of the following materials:
a) mica;
b) aluminum oxide; or
c) zeolite, in particular zeolite A, X and/or Y and/or faujasite.

6. The measuring probe (8) as claimed in one of the preceding claims, **characterized in that** the protective element (10) is temperature-resistant at temperatures up to 500°C, preferably 750°C, particularly preferably 1000°C.

7. The measuring probe (8) as claimed in one of the preceding claims, **characterized in that** the first operating state and the second operating state differ in operating temperature.

8. The measuring probe (8) as claimed in claim 7, **characterized in that** the first operating state is present essentially at temperatures below a limiting temperature, in particular a desorption temperature, and the second operating state is present essentially at temperatures above the limiting temperature.

9. The measuring probe (8) as claimed in claim 8, **characterized in that** the limiting temperature is higher than the boiling temperature of water.

10. The measuring probe (8) as claimed in one of the preceding claims, **characterized in that** the water-binding layer (11) is located at least partially on a surface of the protective element (10).

11. The measuring probe (8) as claimed in claim 10, **characterized in that** the water-binding layer (11) is formed at least partially on a surface of the protective element (10) which is at least partially on the outside in relation to the measuring probe (8) and/or in relation to a measuring sensor (18).

12. The measuring probe (8) as claimed in one of the preceding claims, **characterized in that** the protective element (10) is suitable for essentially gas-tight abutment against the outer surface (14) of the measuring probe (8) and/or of the measuring sensor (18).

13. The measuring probe (8) as claimed in one of the preceding claims, **characterized in that** the protective element (10) is suitable for essentially gas-tight abutment against an inner surface of a measuring probe bore (7).

14. The measuring probe (8) as claimed in one of the preceding claims, **characterized in that** the protective element (10) comprises heating means (16).

15. The measuring probe (8) as claimed in one of the preceding claims, comprising a measuring sensor (18), **characterized in that** the protective element (10) comprises at least an inner surface (13) which abuts at least partially against an outer surface (14) of the measuring probe (8) and/or of the measuring sensor (18) and/or is formed at least partially opposite an outer surface (14) of the measuring probe (8) and/or of the measuring sensor (18).

16. The measuring probe (8) as claimed in one of claims 1 to 14, **characterized in that** a gap (20) is formed between the outer surface (14) of the measuring probe (8) and/or of the measuring sensor (18) and the inner surface (13) of the protective element (10), at least in certain areas.

17. The measuring probe (8) as claimed in one of the preceding claims, **characterized in that** the protective element (10) is integrally formed on the measuring sensor (18) and/or is connected thereto in a materially joined fashion.

18. The measuring probe (8) as claimed in one of the preceding claims, **characterized in that** the protective element (10) is connected in a frictionally and/or positively locking fashion to the measuring probe (8) and/or to the measuring sensor (18).

19. The measuring probe (8) as claimed in one of the preceding claims, which comprises a protective cap (19), **characterized in that** the protective element (10) is formed between the protective cap (19) and the measuring sensor (18).

20. A honeycomb element (1), in particular catalytic converter carrier element and/or filter element, which has cavities (6) through which a fluid can flow, comprising at least one measuring probe (8) as claimed in one of claims 1 to 19.

21. The honeycomb element (1) as claimed in claim 20, **characterized in that** the water-binding layer (11) comprises at least partially a surface of the protective element (10) which can be placed in fluid mechanical contact with the cavities (8).

22. A motor vehicle, in particular an automobile, a motorcycle, an aircraft or a boat, comprising at least one honeycomb element (1) as claimed in claim 20 or 21, and/or a measuring probe (8) as claimed in one of claims 1 to 19.

## Revendications

1. Sonde (8) pour l'utilisation dans le système de gaz d'échappement d'une machine à combustion interne, notamment une sonde Lambda, une sonde de température et/ou une sonde de concentration de gaz, comprenant au moins un élément de protection (10) qui est formé sur la sonde (8) et/ou est relié à celle-ci de façon matériellement jointive, **caractérisée en ce que** l'élément de protection (10) comprend au moins une couche (11) retenant l'eau temporairement, laquelle couche retient l'eau chimiquement et/ou physiquement dans un premier état opérationnel et cède l'eau retenue, dans un deuxième état opérationnel.

2. Sonde (8) selon la revendication 1, **caractérisée en ce que** l'élément de protection (10) a une forme sensiblement fermée avec une surface intérieure (13) et une surface extérieure (15) et a en particulier une forme annulaire et/ou une forme d'anneau de cercle.

3. Sonde (8) selon la revendication 1 ou 2, **caractérisée en ce que** l'élément de protection (10) est compressible ou élastique au moins partiellement.

4. Sonde (8) selon l'une quelconque des revendications précédentes, **caractérisée en ce qu'**au moins la couche (11) retenant l'eau temporairement est poreuse, a notamment une porosité d'au moins 40 %, de préférence moins que 70 %.

5. Sonde (8) selon l'une quelconque des revendications précédentes, **caractérisée en ce que** l'élément de protection (10), notamment la couche (11) retenant l'eau, comprend au moins un des matériaux suivants :
a) du mica ;
b) de l'oxyde d'aluminium ; ou
c) de la zéolithe, notamment de la zéolithe A, X et/ou Y et/ou faujasite.

6. Sonde (8) selon l'une quelconque des revendications précédentes, **caractérisée en ce que** l'élément de protection (10) est résistant à la température à des températures jusqu'à 500°C, de préférence 750°C, particulièrement préféré 1000°C.

7. Sonde (8) selon l'une quelconque des revendications précédentes, **caractérisée en ce que** le premier état opérationnel et le deuxième état opérationnel se distinguent par une température d'opération.

8. Sonde (8) selon la revendication 7, **caractérisée en ce que** le premier état opérationnel existe sensiblement à des températures en dessous d'une température limite, notamment d'une température de désorption et le deuxième état opérationnel sensiblement à des températures au dessus de la température limite.

9. Sonde (8) selon la revendication 8, **caractérisée en ce que** la température limite est plus élevée que la température d'ébullition d'eau.

10. Sonde (8) selon l'une quelconque des revendications précédentes, **caractérisée en ce que** la couche retenant l'eau (11) se trouve au moins partiellement sur une surface de l'élément de protection (10).

11. Sonde (8) selon la revendication 10, **caractérisée en ce que** la couche retenant l'eau (11) est formée au moins partiellement sur une surface de l'élément de protection (10), la couche (11) se trouvant au moins partiellement à l'extérieur relativement par rapport à la sonde (8) et/ou par rapport à un transducteur (18).

12. Sonde (8) selon l'une quelconque des revendications précédentes, **caractérisée en ce que** l'élément de protection (10) est approprié à l'application sensiblement étanche au gaz contre la surface extérieure (14) de la sonde (8) et/ou du transducteur (18).

13. Sonde (8) selon l'une quelconque des revendications précédentes, **caractérisée en ce que** l'élément de protection (10) est approprié à l'application sensiblement étanche au gaz contre une surface intérieure d'un trou de sonde (7).

14. Sonde (8) selon l'une quelconque des revendications précédentes, **caractérisée en ce que** l'élément de protection (10) comprend des moyens de chauffage (16).

15. Sonde (8) selon l'une quelconque des revendications précédentes, comprenant un transducteur (18), **caractérisée en ce que** l'élément de protection (10) comprend au moins une surface intérieure (13) qui s'applique au moins partiellement contre une surface extérieure (14) de la sonde (8) et/ou du transducteur (18) et/ou est réalisée au moins partiellement de manière à être opposée à une surface extérieure (14) de la sonde (8) et/ou du transducteur (18).

16. Sonde (8) selon l'une quelconque des revendications 1 à 14, **caractérisée en ce qu'**au moins dans des régions partielles une fente (20) est réalisée entre la surface extérieure (14) de la sonde (8) et/ou du transducteur (18) et la surface intérieure (13) de l'élément de protection (10).

17. Sonde (8) selon l'une quelconque des revendications précédentes, **caractérisée en ce que** l'élément de protection (10) est formé sur le transducteur (18) et/ou est relié à celui-ci de façon matériellement jointive.

18. Sonde (8) selon l'une quelconque des revendications précédentes, **caractérisée en ce que** l'élément de protection (10) est relié par coopération de forces et/ou par coopération de formes à la sonde (8) et/ou au transducteur (18).

19. Sonde (8) selon l'une quelconque des revendications précédentes, laquelle comprend un capuchon protecteur (19), **caractérisée en ce que** l'élément de protection (10) est formé entre le capuchon protecteur (19) et le transducteur (18).

20. Corps en nids d'abeilles (1), notamment corps support de catalyseur et/ou corps de filtre qui a des cavités (6) à travers lesquelles un fluide peut s'écouler, comprenant au moins une sonde (8) selon l'une quelconque des revendications 1 à 19.

21. Corps en nids d'abeilles (1) selon la revendication 20, **caractérisée en ce que** la couche retenant l'eau (11) comprend au moins partiellement une surface de l'élément de protection (10), qui peut être emmenée en contact mécaniquement fluidique avec les cavités (8).

22. Véhicule automobile, notamment une voiture, une moto, un avion ou un bateau, comprenant au moins un corps en nids d'abeilles (1) selon la revendication 20 ou 21 et/ou un sonde (8) selon l'une quelconque des revendications 1 à 19.
